(19) Europäisches Patentamt
European Patent Office
Office européen des brevets

(11) **EP 4 773 084 A1**

(12) **EUROPEAN PATENT APPLICATION**
published in accordance with Art. 153(4) EPC

(43) Date of publication:
**08.07.2026 Bulletin 2026/28**

(21) Application number: **24859408.7**

(22) Date of filing: **08.08.2024**

(51) International Patent Classification (IPC):
*G06T 15/20* (2011.01)   *G06T 3/4053* (2024.01)
*G06T 7/00* (2017.01)   *G06T 19/00* (2011.01)

(52) Cooperative Patent Classification (CPC):
**G06T 3/4053; G06T 7/00; G06T 15/20; G06T 19/00**

(86) International application number:
**PCT/JP2024/028374**

(87) International publication number:
**WO 2025/047368 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.08.2023 JP 2023138875**

(71) Applicant: **Sony Group Corporation
Tokyo 108-0075 (JP)**

(72) Inventors:
• **TAYA, Kaori**
  **Tokyo 108-0075 (JP)**
• **KOBAYASHI, Yuto**
  **Tokyo 108-0075 (JP)**
• **TAKAHASHI, Noriaki**
  **Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **INFORMATION PROCESSING DEVICE, INFORMATION PROCESSING METHOD, AND COMPUTER-READABLE NON-TRANSITORY STORAGE MEDIUM**

(57) The information processing apparatus includes an estimation unit and a super-resolution processing unit. The estimation unit estimates, using a first model learned to estimate the novel view image corresponding to an arbitrary line-of-sight direction based on multi-view images including a plurality of two-dimensional images, the novel view image. The super-resolution processing unit performs super-resolution processing on the estimated novel view image. In addition, the estimation unit estimates a region subject to processing in which the super-resolution processing is to be performed and a region not subject to processing in which the super-resolution processing is not to be performed, using a second model learned to estimate the region subject to processing and the region not subject to processing according to the line-of-sight direction for each of the novel view images. Furthermore, the super-resolution processing unit performs the super-resolution processing on the estimated region subject to processing, and does not perform the super-resolution processing on the estimated region not subject to processing.

FIG.8

## Description

Field

The present disclosure relates to an information processing apparatus, an information processing method, and a computer-readable non-transitory storage medium.

Background

In recent years, a technology called Neural Radiance Fields (NeRF) capable of reproducing an image from an arbitrary new viewpoint (novel view or novel view image) using a multi-view input image and a camera position and posture as inputs has been proposed and developed (See, for example, Non Patent Literature 1).

Initially, the NeRF requires several tens of seconds for the generation of a novel view image (Novel View Synthesis), and real-time rendering for an input new line-of-sight direction has been difficult. However, in recent years, a plurality of techniques for improving the real-time performance to, for example, approximately 60 fps with Full HD have been proposed (See, for example, Non Patent Literature 2). However, the NeRF has a problem that the output image is more blurred than the input image, and it is difficult to reproduce a sharp image such as a live picture.

As a signal processing solution to this problem, there is a method that applies a learning-based Super Resolution (SR) technology to the NeRF output image to enable the restoration of a sharp image closer to the input image. On the other hand, a method combining "Direct Voxel Grid Optimization", one NeRF technique, with learning-based super-resolution processing has also been proposed, demonstrating that an output image sharper than that by the conventional NeRF can be obtained (See, for example, Non Patent Literature 3).

However, since super-resolution processing also takes a processing time, there is a problem that high-resolution real-time rendering (for example, at 60 fps or more with 4K or 8K) is difficult when combined with NeRF.

Here, as a method for speeding up super-resolution processing, a method has been proposed that determines the complexity of each image patch that is a predetermined pixel unit, and switches between lightweight super-resolution processing and heavy super-resolution processing for each image patch according to the determination result (See, for example, Non Patent Literature 4).

However, since it also takes a processing time to determine the complexity of each image patch, it is difficult to achieve real-time rendering with this method. To counter this, it is conceivable to perform determination processing in advance and store the determination results. However, in the case of a novel view image, storing the determination results for the viewpoints to be output is not realistic in terms of data capacity, unlike in the case of a two-dimensional image.

Note that, as another prior example that switches super-resolution processing for each image patch, a technique that switches the super-resolution processing according to the accuracy of a motion vector in a video has been proposed (See, for example, Patent Literature 1).

Citation List

Non Patent Literature

Non Patent Literature 1: Mildenhall, Ben, Pratul P. Srinivasan, Matthew Tancik, Jonathan T. Barron, Ravi Ramamoorthi, and Ren Ng. 2020. "NeRF: Representing Scenes as Neural Radiance Fields for View Synthesis." arXiv [cs.CV]. arXiv. http://arxiv.org/abs/2003.08934.

Non Patent Literature 2: Wizadwongsa, Suttisak, Pakkapon Phongthawee, Jiraphon Yenphraphai, and Supasorn Suwajanakorn. 2021. "NeX: Real-Time View Synthesis with Neural Basis Expansion." arXiv [cs.CV].arXiv.http://arxiv.org/abs/2103.05606.

Non Patent Literature 3: Wang, Zhongshu, Lingzhi Li, Zhen Shen, Li Shen, and Liefeng Bo. 2022. "4K-NeRF: High Fidelity Neural Radiance Fields at Ultra High Resolutions." arXiv [cs.CV]. arXiv. http://arxiv.org/abs/2212.04701.

Non Patent Literature 4: Kong, Xiangtao, Hengyuan Zhao, Yu Qiao, and Chao Dong. 2021. "ClassSR: A General Framework to Accelerate Super-Resolution Networks by Data Characteristic." https://openaccess.thecvf.com/content/CVPR2021/papers/Kong_ClassSR_A_General_Framework_to_Accelerate_Super-Resolution_Networks_by_Data_CVPR_2021_paper.pdf.

Patent Literature

Patent Literature 1: JP 2018-023034 A

Summary

Technical Problem

However, although the above-described prior art can speed up super-resolution processing by switching the super-resolution processing for each image patch according to the accuracy of motion prediction, the prior art is a technique for improving the image quality of a two-dimensional video using codec information of the two-dimensional video, and thus cannot be applied as it is to a case where super-resolution processing is performed on the rendering result of a novel view image.

Therefore, the present disclosure proposes an information processing apparatus, an information processing method, and a computer-readable non-transitory storage medium capable of speeding up super-resolution processing in a case where the super-resolution processing is performed on the rendering result of a novel view image. Solution to Problem

In order to solve the above problems, one aspect of an information processing apparatus according to the present disclosure includes an estimation unit and a super-resolution processing unit. The estimation unit estimates, using a first model learned to estimate a novel view image corresponding to an arbitrary line-of-sight direction based on multi-view images including a plurality of two-dimensional images, the novel view image. The super-resolution processing unit performs super-resolution processing on the estimated novel view image. In addition, the estimation unit estimates a region subject to processing in which the super-resolution processing is to be performed and a region not subject to processing in which the super-resolution processing is not to be performed, using a second model learned to estimate the region subject to processing and the region not subject to processing according to the line-of-sight direction for each of the novel view images. Furthermore, the super-resolution processing unit performs the super-resolution processing on the estimated region subject to processing, and does not perform the super-resolution processing on the estimated region not subject to processing.

Brief Description of Drawings

FIG. 1 is a diagram illustrating a flow of basic processing before super-resolution processing according to an embodiment of the present disclosure.

FIG. 2 is a conceptual diagram of MPIs.

FIG. 3 is a conceptual diagram of formula (b).

FIG. 4 is a supplementary explanatory view of FIG. 3.

FIG. 5 is a conceptual figure of an information processing method according to the present embodiment.

FIG. 6 illustrates examples of a NeRF output image, an image after super-resolution processing, and a difference image.

FIG. 7 is a diagram for explaining an overview of the information processing method according to the present embodiment.

FIG. 8 is a block diagram illustrating a configuration example of an information processing apparatus according to the embodiment of the present disclosure.

FIG. 9 is a flowchart illustrating a processing procedure of learning processing of a difference map model for generating a switching map, executed by the information processing apparatus.

FIG. 10 is a diagram illustrating parameters added in learning processing of a difference map model.

FIG. 11 is a flowchart illustrating a processing procedure of real-time rendering processing using the switching map, executed by the information processing apparatus.

FIG. 12 illustrates an example of a difference map.

FIG. 13 illustrates an example of the super-resolution processing switching map.

FIG. 14 is a hardware configuration diagram illustrating an example of a computer that implements functions of the information processing apparatus.

Description of Embodiments

Hereinafter, embodiments of the present disclosure will be described in detail with reference to the drawings. Note that, in the following embodiments, the same parts are denoted by the same reference numerals so that redundant description can be omitted.

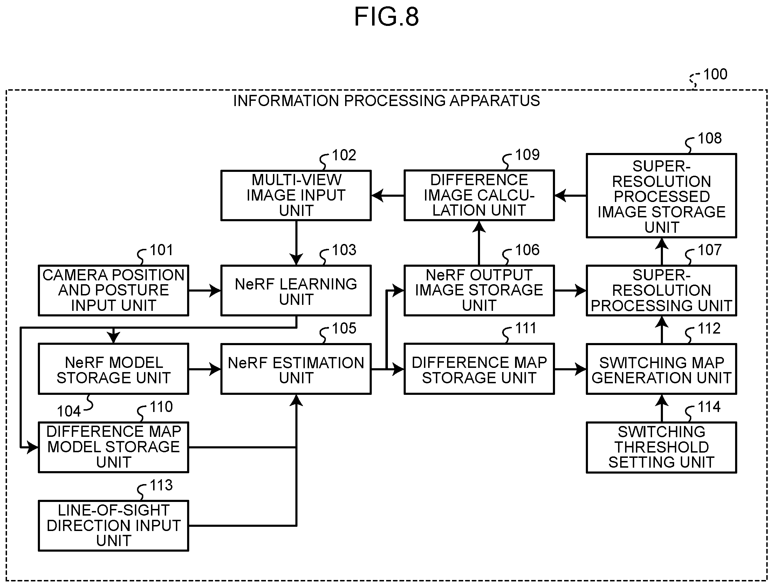

In addition, in the following description, an information processing apparatus according to the embodiments of the present disclosure (hereinafter, referred to as the "present embodiment" as appropriate) is an information processing apparatus 100 (see FIG. 8) that performs rendering of a novel view image corresponding to a line-of-sight direction using NeRF, and performs super-resolution processing on an output image after rendering (hereinafter, referred to as a "NeRF output image" as appropriate) to output an image after super-resolution processing. Furthermore, in the following description, an information processing method according to the embodiments of the present disclosure is an information processing method executed by the information processing apparatus 100.

The present disclosure will be described according to the following item order.

1. Overview

    1-1. Description of NeRF
    1-2. Description of NeX rendering processing
    1-3. Description of super-resolution processing and switching processing thereof

2. Configuration example of information processing apparatus

    2-1. Block diagram
    2-2. Processing procedure of learning processing of difference map model for generating switching map
    2-3. Processing procedure of real-time rendering processing using switching map

3. Modification
4. Hardware configuration
5. Conclusion

<<1. Overview>>

<1-1. Description of NeRF>

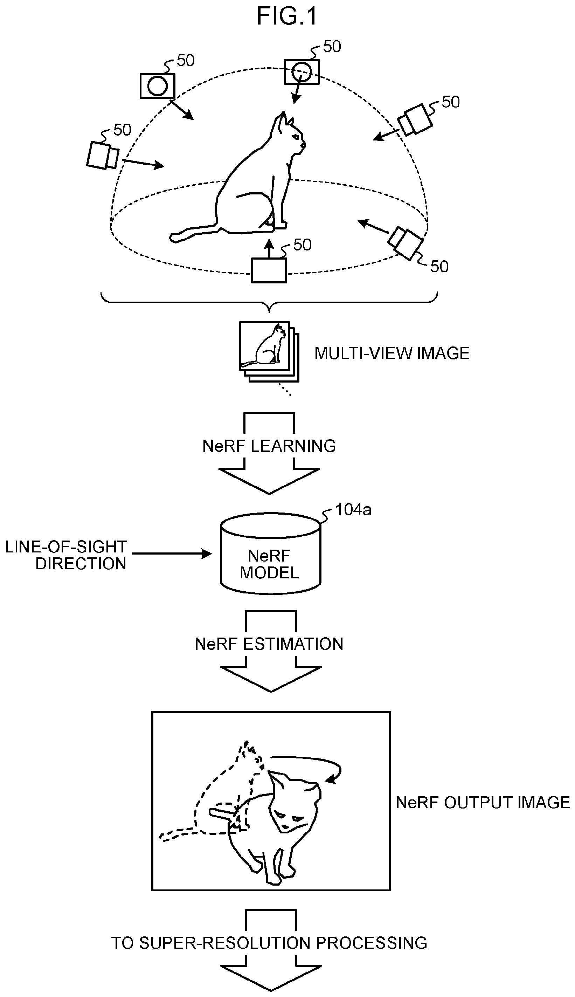

FIG. 1 is a diagram illustrating a flow of basic processing before super-resolution processing according to an embodiment of the present disclosure. As illustrated in FIG. 1, "NeRF" is a technique for generating a novel view image viewed from an arbitrary new viewpoint in a three-dimensional space where an object as a subject exists based on deep learning using multi-view images that are a two-dimensional image group photographed from various angles by a camera 50.

As illustrated in FIG. 1, in the information processing method according to the present embodiment, deep learning for NeRF (hereinafter, referred to as "NeRF learning" as appropriate) using multi-view images as a data set is performed to generate a NeRF model 104a. The NeRF model 104a is a neural network learned to estimate a novel view image viewed from a line-of-sight direction from an arbitrary viewpoint position when the line-of-sight direction is input. In other words, the NeRF model 104a is a model for synthesizing a radiance field using the neural network.

Subsequently, in the information processing method according to the present embodiment, in a case where an arbitrary line-of-sight direction is input, a novel view image viewed from the line-of-sight direction is estimated (hereinafter, referred to as "NeRF estimation" as appropriate) using the NeRF model 104a, and the NeRF output image is generated as a NeRF estimation result, that is, a rendering result. The arrow in the NeRF output image illustrated in FIG. 1 schematically indicates that the position and orientation of an object (a cat in this case) change according to changes in the position of the viewpoint and the line-of-sight direction.

Then, in the information processing method according to the present embodiment, super-resolution processing is performed on the NeRF output image, and an image after super-resolution processing is displayed on a display device such as a display.

Note that, although there has conventionally been a technique called photogrammetry using a similar model-based method, it is difficult to reproduce information such as the degree of reflection of light and the degree of appearance of scenery seen through the object. However, in "NeRF", by using the neural network, the degree of existence of an object at each point and color distribution (hereinafter, referred to as "radiance fields" as appropriate) can be estimated with high accuracy from information on a position and a viewing angle in a three-dimensional space. By converting the radiance field into a two-dimensional image using a rendering method called volume rendering, the novel view image can be expressed.

<1-2. Description of NeX rendering processing>

By the way, NeRF can conventionally render a high-definition novel view image, but there is a problem that volume rendering using a neural network requires a lot of processing time. Specifically, it takes approximately 30 seconds to perform the processing per viewpoint even if a GPU (Graphical Processing Unit) is used.

On the other hand, recently, many techniques for shortening the rendering time by caching the calculation results of the neural network in various formats have been proposed. In a technique called "NeX" disclosed in Non Patent Literature 2, intermediate data of the NeRF model 104a is cached in the form of multiplane images (MPIs) in which a plurality of images are arranged in the depth direction, thereby speeding up volume rendering processing by approximately 1,000 times as compared with NeRF, and enabling real-time rendering.

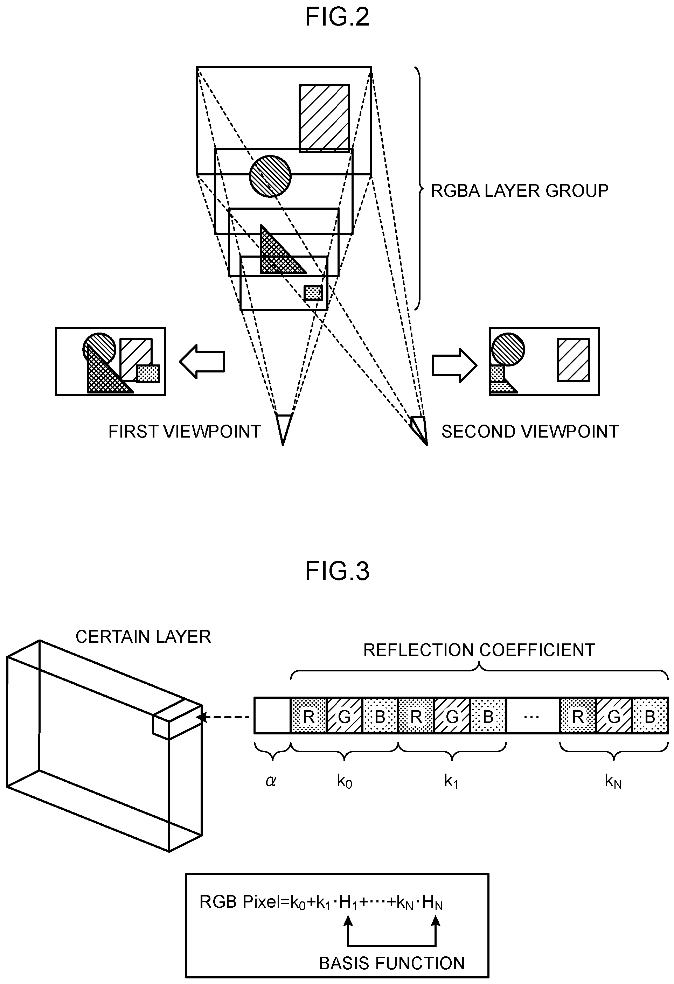

FIG. 2 is a conceptual diagram of MPIs. As illustrated in FIG. 2, the MPIs usually have a structure including a group of RGBA layers in which translucent RGBA images are stacked in a frustum shape in a three-dimensional space so as to cover from an object closest to the camera 50 that has photographed the scene to a sufficiently distant depth. A novel view image is generated by superimposing the RGBA images constituting the MPIs while shifting the RGBA images according to the line-of-sight direction from each viewpoint. Note that the first viewpoint in FIG. 2 is, for example, a photographing position of the camera 50. The second viewpoint is a new arbitrary viewpoint position that is, for example, not the photographing position of the camera 50.

A radiance field in NeX is learned such that RGB values obtained by volume-rendering these MPIs are optimized to be close to RGB values photographed by the camera 50.

Then, the rendering processing by NeX is in a form in which a ray is tracked from the line-of-sight direction, and the color at a point where the ray and the MPI intersect is multiplied by and added to an existence probability $\alpha$ at the point. The following formula (a) is a formula representing a method of calculating RGB values of an output image in a case where an existence probability $A(=\{\alpha_1, \alpha_2, ..., \alpha_D\})$ and a color component $C(=\{c_1, c_2, ..., c_D\})$ are input.

$$O(A, C) = \sum_{d=1}^{D} c_d T_d(A), T_d(A) = \alpha_d \prod_{i=d+1}^{D} (1 - \alpha_i) \qquad \cdots (\text{a})$$

The $c_d$ in the formula (a) is calculated by weighting and adding a color component $k_0$ that does not change depending on the angle at which the image is viewed, that is, an angle-independent color component, and color components $k_1$ to $k_N$ that change depending on the angle at which the image is viewed, that is, angle-dependent (view dependent, hereinafter referred to as "VD" as appropriate) color components. The following formula (b) is a formula for calculating $c_d$.

$$C^P(v) = k_0^P + \sum_{n=1}^{N} k_n^P H_n(v) \qquad \cdots (\text{b})$$

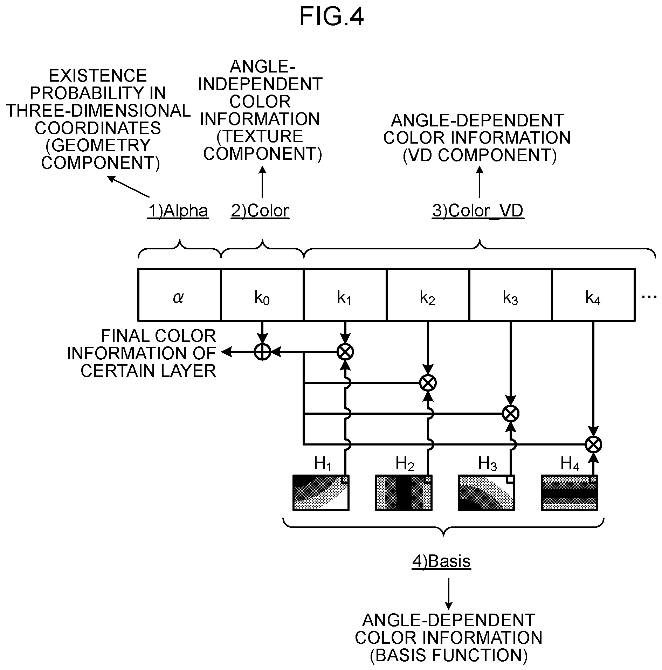

FIG. 3 is a conceptual diagram of formula (b). In addition, FIG. 4 is a supplementary explanatory view of FIG. 3. As illustrated in FIG. 3, an arbitrary one point (here, one point in the upper right corner) of a certain layer in the NeRF model 104a by NeX has a reflection coefficient including the above-described $k_0$ and $k_1$, ..., and $k_N$ obtained when the $k_0$ is viewed at various angles for each existence probability $\alpha$ at the one point.

Then, basis functions $H_1$, ..., and $H_N$ learned from the neural network have different weightings depending on $k_1$, ..., and $k_N$ with various viewing angles, and are linearly combined. Thus, the RGB value at the above-described one point when viewed at a certain angle is determined. With such modeling, it is possible to reproduce a phenomenon in which an object looks different even at the same place depending on the angle.

Note that, as a supplement to a description of each parameter illustrated in FIG. 3 with reference to FIG. 4, which partly includes an overlap, the $\alpha$ described above is an existence probability in three-dimensional coordinates and corresponds to a "geometry component" (see "1) Alpha" in the figure). In addition, $k_0$ is angle-independent color information and corresponds to a "texture component" (see "2) Color" in the figure).

Furthermore, $k_1$ to $k_4$ ... are angle-dependent color information and correspond to a "VD component" (see "3) Color_VD" in the figure). Also, $H_1$ to $H_4$ ... are angle-dependent color information and correspond to the "basis function" (see "4) Basis" in the figure).

<1-3. Description of super-resolution processing and switching processing thereof>

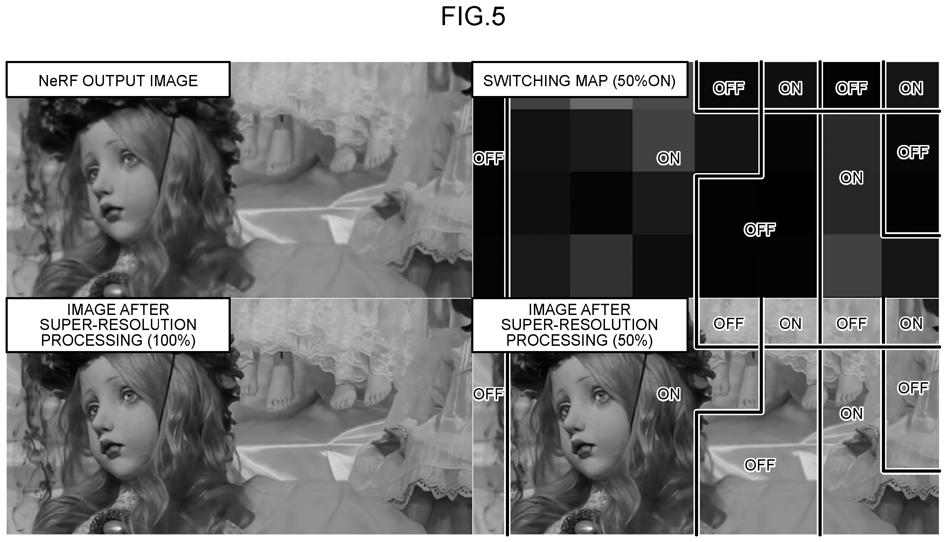

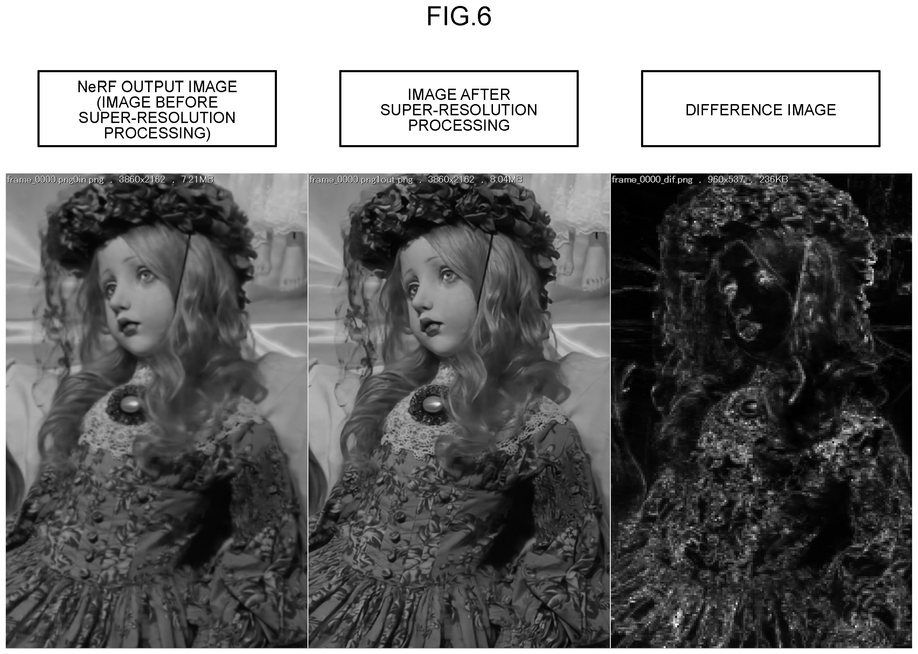

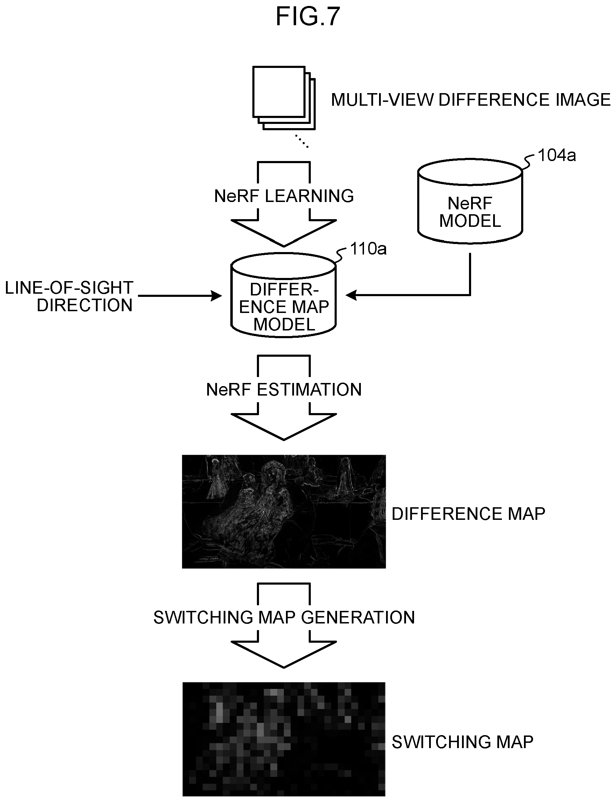

Next, super-resolution processing and switching processing thereof will be described with reference to FIGS. 5 to 7. FIG. 5 is a conceptual figure of an information processing method according to the present embodiment. In addition, FIG. 6 illustrates examples of the NeRF output image, the image after super-resolution processing, and a difference image. Furthermore, FIG. 7 is a diagram for explaining an overview of the information processing method according to the present embodiment.

Super-resolution processing is a technique for acquiring a high-resolution output image from a low-resolution input image. Learning type super-resolution processing, one of super-resolution processing, can generate a high-resolution image from a single input image, and is known as a method with high restoration accuracy. As illustrated in the "NeRF output image" and the "image after super-resolution processing (100%)" in FIG. 5, it is possible to improve the sense of resolution in the image by performing super-resolution processing on the NeRF output image, for example, to sharpen the hair of the doll in FIG. 5.

However, since super-resolution processing also requires a calculation cost, it is necessary to speed up the super-resolution processing in order to achieve real-time rendering by NeRF. In order to obtain the "image after super-resolution processing (100%)" in FIG. 5, it takes a processing time to perform super-resolution processing on all the pixels (that is, 100%) of the NeRF output image.

In the information processing method according to the present embodiment, switching processing of super-resolution processing to speed up the super-resolution processing has been studied. As illustrated in the "switching map (50% ON)" in FIG. 5, the switching processing of super-resolution processing refers to processing for dividing an image into image patches that are predetermined pixel units (for example, 128×128 pixels) and switching whether or not to perform super-resolution processing for each image patch. The image patch on which super-resolution processing is performed corresponds to a "region subject to processing". The image patch on which super-resolution processing is not performed corresponds to a "region not subject to processing". Note that, in the present embodiment, a case where super-resolution processing is performed corresponds to "ON". A case where super-resolution processing is not performed corresponds to "OFF".

In the information processing method according to the present embodiment, NeRF learning is performed on a difference image between before and after super-resolution processing. FIG. 6 illustrates examples of the NeRF output image, the image after super-resolution processing, and the difference image. In the information processing method according to the present embodiment, as illustrated in FIG. 6, NeRF learning is performed on the difference image between the NeRF output image and the image after super-resolution processing for each viewpoint of the plurality of two-dimensional images included in the above-described multi-view images. Then, when a new viewpoint and a new line-of-sight direction are input, an image patch estimated to have a large three-dimensional difference amount between before and after super-resolution processing is set to ON, and an image patch estimated to have a small difference amount is set to OFF.

For example, even in a case where the image patches are set to ON so as to perform super-resolution processing on half (that is, 50%) of the total number of image patches, as illustrated in the "image after super-resolution processing (50%)" in FIG. 5, it is possible to generate an output image that looks substantially the same as the "image after super-resolution processing (100%)".

In order to achieve this processing, it is necessary to generate a super-resolution processing switching map (hereinafter, referred to as a "switching map" as appropriate) that enables highly accurate ON/OFF switching of super-resolution processing. The switching map corresponds to an example of "map information". In the prior art, processing is switched for each image patch using a network for complexity determination, or processing is switched according to the reliability of a motion vector. In the present embodiment, a method that generates a switching map corresponding to three-dimensional representation by NeRF will be described.

Note that, although the example using the image patch has been described here, the predetermined pixel unit serving as a unit for ON/OFF switching of super-resolution processing may be each pixel. Such a unit for ON/OFF switching can be selected as appropriate according to, for example, the performance of the GPU included in the information processing apparatus 100, or the like.

An overview of the information processing method according to the present embodiment related to the generation of the switching map will be described. As illustrated in FIG. 7, in the information processing method according to the present embodiment, a multi-view difference image is acquired that is the difference image between the NeRF output image and the image after super-resolution processing for each viewpoint of the plurality of two-dimensional images described above. Then, NeRF learning is performed using the multi-view difference images as a data set to generate a difference map model 110a. The difference map model 110a is a neural network learned to estimate a difference image viewed from a line-of-sight direction from an arbitrary viewpoint position when the line-of-sight direction is input. In other words, the difference map model 110a is a model for synthesizing a radiance field using the neural network.

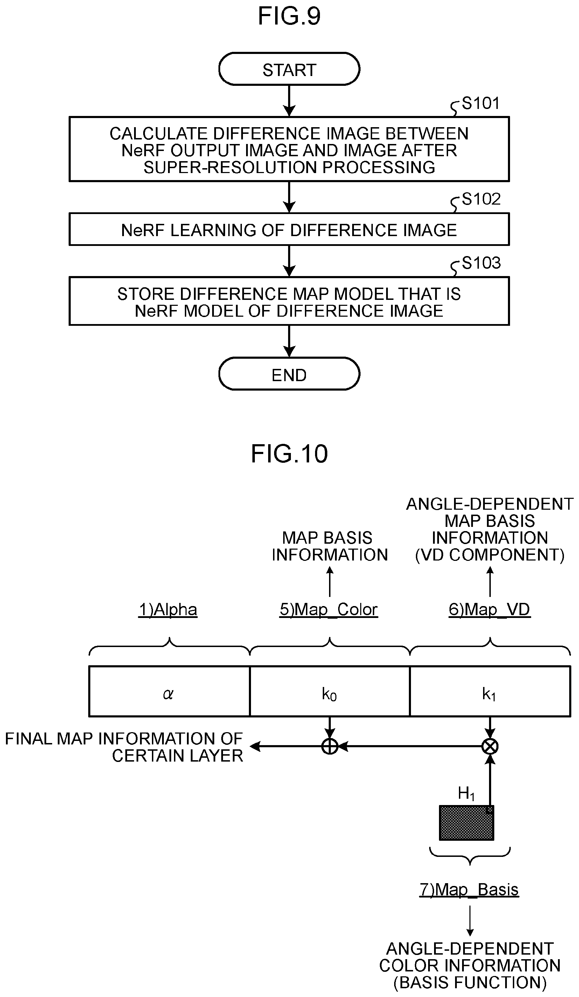

At this time, the difference map model 110a may be learned by transfer learning based on the NeRF model 104a. Since the NeRF model 104a has already learned the existence probability $\alpha$ of the object in a three-dimensional space, the learning can be converged at high speed using transfer learning. Details of this point will be described later with reference to FIG. 10.

Subsequently, in the information processing method according to the present embodiment, in a case where an arbitrary line-of-sight direction is input, NeRF estimation using the difference map model 110a is performed, and a difference image viewed from the line-of-sight direction is rendered and output as a difference map.

Then, in the information processing method according to the present embodiment, the above-described switching map is generated based on the difference map. For example, the switching map is generated by reducing the resolution of the difference map for each of the above-described image patches.

Then, in the information processing method according to the present embodiment, the above-described ON/OFF setting is performed for each image patch according to the generated switching map, and super-resolution processing is performed only on the image patches that have been set to ON.

<<2. Configuration example of information processing apparatus>>

<2-1. Block diagram>

Next, a configuration example of an information processing apparatus 100 that executes the information processing method according to the present embodiment will be described. FIG. 8 is a block diagram illustrating a configuration example of the information processing apparatus 100 according to the embodiment of the present disclosure. Note that, in FIG. 8, only components necessary for the description of the present embodiment are illustrated as the functional blocks, and descriptions of general components are omitted.

In addition, when descriptions are given with reference to FIG. 8, explanations on the already described components are simplified or omitted as appropriate.

As illustrated in FIG. 8, the information processing apparatus 100 includes a camera position and posture input unit 101, a multi-view image input unit 102, a NeRF learning unit 103, a NeRF model storage unit 104, a NeRF estimation unit 105, a NeRF output image storage unit 106, and a super-resolution processing unit 107.

In addition, the information processing apparatus 100 includes a super-resolution processed image storage unit 108, a difference image calculation unit 109, a difference map model storage unit 110, a difference map storage unit 111, a switching map generation unit 112, a line-of-sight direction input unit 113, and a switching threshold setting unit 114.

Note that, although not illustrated in FIG. 8, the information processing apparatus 100 may be connected to an input device such as a keyboard or a mouse that receives a general input operation from a user or the like, or an output device such as a display.

In addition, although not illustrated, the information processing apparatus 100 includes a storage unit and a control unit. The storage unit is implemented by, for example, a storage device such as random access memory (RAM), read only memory (ROM), flash memory, or a hard disk drive (HDD).

The storage unit includes, for example, the NeRF model storage unit 104, the NeRF output image storage unit 106, the super-resolution processed image storage unit 108, the difference map model storage unit 110, and the difference map storage unit 111.

The control unit controls each unit of the information processing apparatus 100. The control unit is implemented by, for example, a GPU, a central processing unit (CPU), a micro processing unit (MPU), or the like executing a program (not illustrated) according to the present embodiment stored in the storage unit using the RAM or the like as a working area. In addition, the control unit can be implemented by, for example, an integrated circuit such as an application specific integrated circuit (ASIC) or a field programmable gate array (FPGA).

The control unit includes, for example, the camera position and posture input unit 101, the multi-view image input unit 102, the NeRF learning unit 103, the NeRF estimation unit 105, the super-resolution processing unit 107, the difference image calculation unit 109, the switching map generation unit 112, the line-of-sight direction input unit 113, and the switching threshold setting unit 114, and implements or executes functions and actions of information processing to be described below.

<2-2. Processing procedure of learning processing of difference map model for generating switching map>

Next, a processing procedure executed by the information processing apparatus 100 for learning processing of the difference map model 110a for generating the switching map will be described with reference to the already referenced FIG. 8, and FIGS. 9 and 10. FIG. 9 is a flowchart illustrating the processing procedure, executed by the information processing apparatus 100, of learning processing of the difference map model 110a for generating the switching map. In addition, FIG. 10 is a diagram illustrating parameters added in learning processing of the difference map model 110a.

The switching map according to the present embodiment is required to be map information capable of determining whether a difference between the input image and the output image for super-resolution processing is large or small. Furthermore, it is desirable that the map information can express a value that changes according to viewpoint transformation, and can be obtained at a low calculation cost and at a high speed.

Therefore, in the present embodiment, NeRF learning is performed on a difference between a rendering image by NeRF (that is, the NeRF output image) and the image after super-resolution processing that is a result of the super-resolution processing on the NeRF output image, to generate map information enabling three-dimensional real-time rendering for the difference.

First, in the usual NeRF learning, as illustrated in FIG. 8, the NeRF learning unit 103 learns the three-dimensional existence probability $\alpha$ and color information changing according to the viewpoint from the camera position and posture and the multi-view images corresponding thereto input from the camera position and posture input unit 101 and the multi-view image input unit 102. Then, the NeRF learning unit 103 outputs the resulting NeRF model 104a to the NeRF model storage unit 104.

Furthermore, the NeRF estimation unit 105 estimates an image viewed from a viewpoint and a line-of-sight direction input from the line-of-sight direction input unit 113 according to the NeRF model 104a stored in the NeRF model storage unit 104, and outputs the image to the NeRF output image storage unit 106 as the NeRF output image.

Further, in a case where super-resolution processing is performed thereafter, the super-resolution processing unit 107 performs the super-resolution processing on the NeRF output image stored in the NeRF output image storage unit 106, and outputs the image to the super-resolution processed image storage unit 108 as the image after super-resolution processing.

After the usual NeRF learning and super-resolution processing described above, the processing procedure of learning processing of the difference map model 110a for generating the switching map is performed as follows. As illustrated in FIG. 9, first, the difference image calculation unit 109 calculates a difference image between the NeRF output image and the image after super-resolution processing obtained by performing super-resolution processing on the NeRF output image (step S101). That is, the difference image calculation unit 109 calculates a difference image between the novel view image and the image after super-resolution processing for each viewpoint of the plurality of two-dimensional images included in the above-described multi-view images used for NeRF learning of the NeRF model 104a.

The NeRF output image is stored in the NeRF output image storage unit 106, and the image after super-resolution processing is stored in the super-resolution processed image storage unit 108. In addition, as already illustrated in FIG. 6, the difference image calculated at this time tends to have, for example, a small difference amount in a flat region with few edges (see a portion with strong blackness in the difference image), and a large difference amount in a non-flat region with many edges (see a portion with strong whiteness in the difference image).

Then, the NeRF learning unit 103 performs NeRF learning using the difference image calculated in step S101 and the camera position and posture input from the camera position and posture input unit 101 as inputs (step S102).

Note that, at this time, NeRF learning of the difference image may be performed using a neural network completely different from the NeRF model 104a. On the other hand, as illustrated in FIG. 10, a neural network using the existence probability $\alpha$ common to the NeRF model 104a may be created by newly adding parameters (see "5) Map_Color" and "6) Map_VD" in the figure) to the original NeRF model 104a, to allow the neural network to perform transfer learning. When transfer learning is performed, since the existence probability $\alpha$ of the object in a three-dimensional space has been learned, the learning can be converged at high speed.

In the example of FIG. 10, $k_0$ is map basis information. In addition, $k_1$ is angle-dependent map basis information and corresponds to the "VD component". In addition, $H_1$ is angle-dependent color information and corresponds to the "basis function" (see "7) Map_Basis" in the figure). In FIG. 10, only one component $k_1$ is illustrated as the VD component for convenience of description, but two or more components may be used. That is, the parameters newly added in the difference map model 110a indicate how the difference looks when the angle-independent map basis information is viewed from various angles. These new parameters can also be said to represent the difference between before and after super-resolution processing as three-dimensionally translucent edge information using MPIs.

Then, the NeRF learning unit 103 outputs the difference map model 110a that is the NeRF model of the learned difference image to the difference map model storage unit 110 to store the difference map model 110a (step S103).

At this time, the NeRF learning unit 103 converts the difference map model 110a into a format enabling real-time rendering and outputs the model. For example, in the case of NeX, the NeRF learning unit 103 outputs the color component $k_0$ that does not change depending on the line-of-sight direction, the color components $k_1$, $k_2$, ..., and $k_N$ that change depending on the line-of-sight direction, and the weight basis functions $H_1$, $H_2$, ..., and $H_N$ corresponding thereto to the difference map model storage unit 110 in the form of MPIs.

Here, in a case where reinforcement learning is performed by sharing the existence probability $\alpha$ with the original NeRF model 104a, $\alpha$ does not need to be newly output. In addition, the resolution of MPIs in the difference map model 110a is not necessarily the same as that of the original NeRF model 104a. For example, the resolution may be 1/2, 1/4, or less of the original MPI resolution.

<2-3. Processing procedure of real-time rendering processing using switching map>

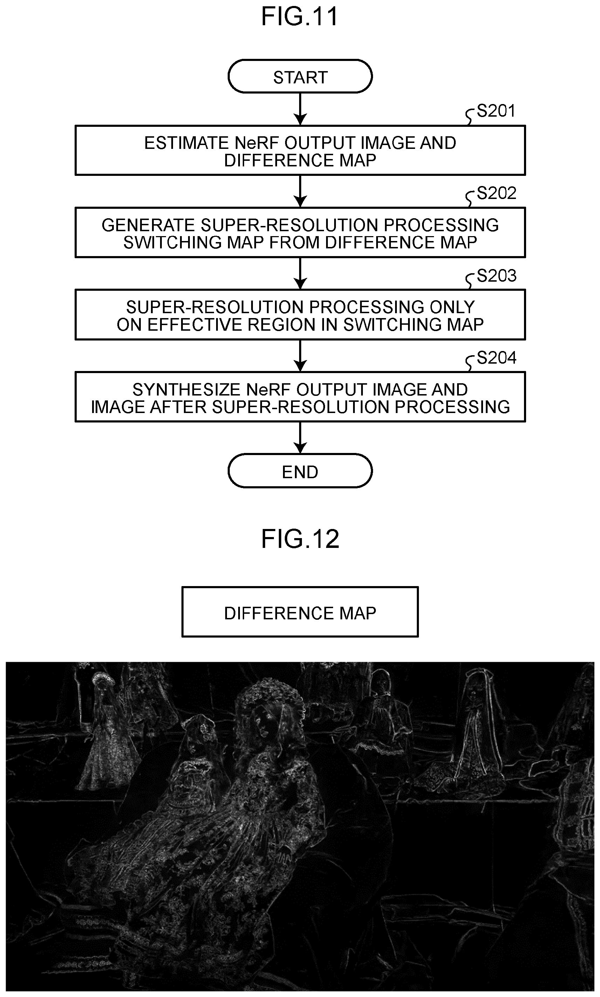

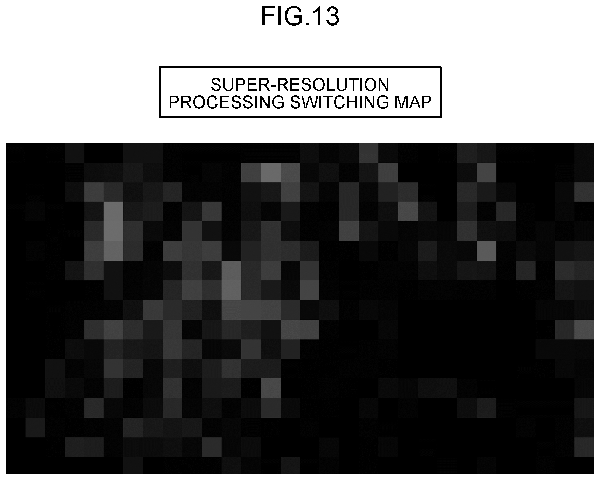

Next, a processing procedure executed by the information processing apparatus 100 for real-time rendering processing using the switching map will be described with reference to the already referenced FIG. 8, and FIGS. 11 to 13. FIG. 11 is a flowchart illustrating the processing procedure of the real-time rendering processing using the switching map, executed by the information processing apparatus 100. In addition, FIG. 12 illustrates an example of the difference map. Furthermore, FIG. 13 illustrates an example of the switching map.

In the real-time rendering processing using the switching map, as illustrated in FIG. 11, the NeRF estimation unit 105 estimates the NeRF output image and the difference map based on the NeRF model 104a of the NeRF model storage unit 104, the line-of-sight direction obtained from the line-of-sight direction input unit 113, and the difference map model 110a in the difference map model storage unit 110 (step S201). Then, the NeRF estimation unit 105 outputs the estimated NeRF output image to the NeRF output image storage unit 106 and outputs the difference map to the difference map storage unit 111. An example of the estimated difference map is illustrated in FIG. 12.

Subsequently, the switching map generation unit 112 generates the super-resolution processing switching map from the difference map (step S202). First, the switching map generation unit 112 generates the switching map by reducing the resolution of the difference map for each of the above-described image patches. An example of the switching map at this stage is illustrated in FIG. 13.

Then, the switching map generation unit 112 performs threshold processing on the switching map for each of the above-described image patches according to a threshold (for example, the above-described 50% or the like) preset by the switching threshold setting unit 114, and performs ON/OFF setting of the super-resolution processing for each of the image patches. The image at this time corresponds to, for example, the "switching map (50% ON)" in the already referenced FIG. 5. Note that the set value of the map may not be binary values of ON/OFF, but may be three or more set values corresponding to first super-resolution processing, second super-resolution processing, OFF, or the like. In addition, the set value of the map may be the one indicating at least one of the region subject to processing and the region not subject to processing.

Then, the super-resolution processing unit 107 performs super-resolution processing only on the effective region in the switching map (that is, the image patch set to ON) according to the set value of the switching map (step S203).

Finally, the super-resolution processing unit 107 synthesizes the NeRF output image stored in the NeRF output image storage unit 106 and the image after super-resolution processing (S204). At this time, the super-resolution processing unit 107 performs the synthesis according to the difference map in the difference map storage unit 111, and outputs the image after synthesis to the super-resolution processed image storage unit 108.

In the synthesis here, for example, $\alpha$ blending may be performed according to the value in the difference map as illustrated in the following formula (c).

$$out_{x,y} = \left(1 - f(\delta_{x,y})\right) s(nerf_{x,y}) + f(\delta_{x,y})sr_{x,y} \quad 0 \le f(\delta_{x,y}) \le 1$$

$$\cdots (c)$$

Here, x and y indicate xy coordinates of the image. out is the output image. In addition, $\delta$ is the difference map, nerf is the NeRF output image, and sr is the image after super-resolution processing. s() is a function that performs scaling processing for matching the scales of nerf and sr, and f() is a function that associates the difference map with $\alpha$ blend values (0 to 1). In a region where the super-resolution processing has not been performed, the output is out=s (nerf). The actual image after synthesis corresponds to, for example, the "image after super-resolution processing (50%)" in the already referenced FIG. 5.

<<3. Modification>>

For example, among the processings described in the above-described embodiment of the present disclosure, all or a part of the processings described as being automatically performed can be manually performed, or all or a part of the processings described as being manually performed can be automatically performed by a known method. In addition, the processing procedure, specific name, and information including various data and parameters illustrated in the above document and the drawings can be arbitrarily changed unless otherwise specified. For example, the various types of information illustrated in each figure are not limited to the illustrated information.

In addition, each component of each apparatus illustrated in the drawings is functionally conceptual, and is not necessarily physically configured as illustrated in the drawings. That is, a specific form of distribution and integration of each apparatus is not limited to the illustrated form, and all or a part of it can be functionally or physically distributed and integrated in an arbitrary unit according to various loads, usage conditions, and the like.

For example, the NeRF estimation unit 105 and the switching map generation unit 112 may be integrated as one processing unit.

In addition, the above-described embodiments of the present disclosure can be combined as appropriate within a range that does not contradict processing contents. Furthermore, the order of each step illustrated in the sequence diagram or the flowchart of the present embodiment can be changed as appropriate.

In the above-described embodiment of the present disclosure, the image after super-resolution processing is displayed on the display device such as a display. However, the display may be a light field display that expresses stereoscopic vision using a parallax image. In this case, the line-of-sight direction input unit 113 receives the line-of-sight direction of the user as an input from, for example, a camera mounted on the light field display. In addition, the NeRF model 104a and the difference map model 110a render a left-eye image for the left eye and a right-eye image for the right eye of the user.

<<4. Hardware configuration>>

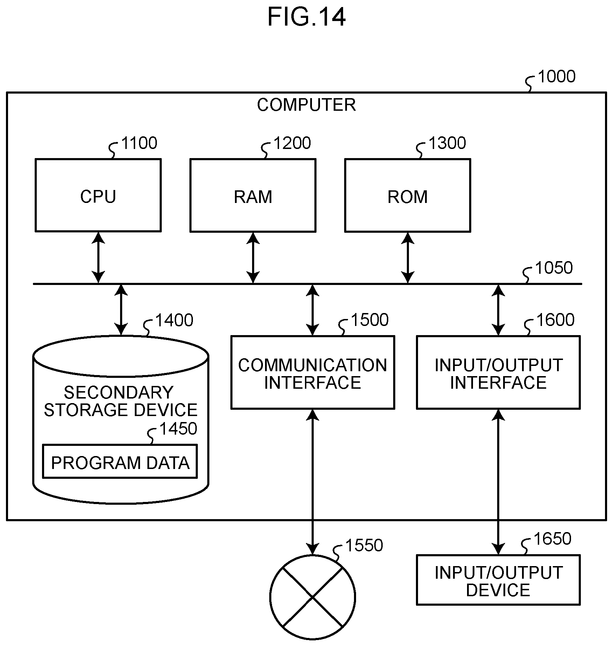

The information processing apparatus 100 according to the above-described embodiment of the present disclosure is implemented by a computer 1000 configured as illustrated in FIG. 14, for example. FIG. 14 is a hardware configuration diagram illustrating an example of the computer 1000 that implements functions of the information processing apparatus 100. The computer 1000 includes a CPU 1100, a RAM 1200, a ROM 1300, a secondary storage device 1400, a communication interface 1500, and an input/output interface 1600. The units of the computer 1000 are connected to each other by a bus 1050.

The CPU 1100 operates based on a program stored in the ROM 1300 or the secondary storage device 1400, and controls each unit. For example, the CPU 1100 deploys the program stored in the ROM 1300 or the secondary storage device 1400 to the RAM 1200, and executes processing corresponding to various programs.

The ROM 1300 stores a boot program such as a basic input output system (BIOS) executed by the CPU 1100 when the computer 1000 starts up, a program dependent on hardware of the computer 1000, and the like.

The secondary storage device 1400 is a computer-readable recording medium that non-transiently records a program executed by the CPU 1100, data used by the program, and the like. Specifically, the secondary storage device 1400 is a recording medium that records a program according to the present embodiment serving as an example of program data 1450.

The communication interface 1500 is an interface for the computer 1000 to connect to an external network 1550. For example, the CPU 1100 receives data from another device or transmits data generated by the CPU 1100 to the other device via the communication interface 1500.

The input/output interface 1600 is an interface for connecting an input/output device 1650 and the computer 1000. For example, the CPU 1100 receives data from an input device such as a keyboard and a mouse via the input/output interface 1600. In addition, the CPU 1100 transmits data to an output device such as a display, a speaker, or a printer via the input/output interface 1600. Furthermore, the input/output interface 1600 may function as a media interface that reads a program or the like recorded in a predetermined recording medium (medium). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, when the computer 1000 functions as the information processing apparatus 100, the CPU 1100 of the computer 1000 implements the above-described functions of the control unit by executing a program loaded on the RAM 1200. In addition, the secondary storage device 1400 stores the program according to the present embodiment, various models including the NeRF model 104a and the difference map model 110a, and various data including the NeRF output image and the image after super-resolution processing. The CPU 1100 reads the program data 1450 from the secondary storage device 1400 and executes the program data, but as another example, these programs may be acquired from another device via the external network 1550.

<<5. Conclusion>>

As described above, according to the embodiment of the present disclosure, the information processing apparatus 100 includes the NeRF estimation unit 105 (corresponding to an example of the "estimation unit ") and the super-resolution processing unit 107. The NeRF estimation unit 105 estimates the NeRF output image using the NeRF model 104a (corresponding to an example of a "first model") learned to estimate the NeRF output image (corresponding to an example of the "novel view image") corresponding to an arbitrary line-of-sight direction based on the multi-view images including the plurality of two-dimensional images. The super-resolution processing unit 107 performs super-resolution processing on the estimated NeRF output image. In addition, the NeRF estimation unit 105 estimates the region subject to processing in which the super-resolution processing is to be performed and the region not subject to processing in which the super-resolution processing is not to be performed, using the difference map model 110a (corresponding to an example of a "second model") learned to estimate the region subject to processing and the region not subject to processing according to the line-of-sight direction for each NeRF output image. Furthermore, the super-resolution processing unit 107 performs the super-resolution processing on the estimated region subject to processing, and does not perform the super-resolution processing on the estimated region not subject to processing. As a result, it is possible to speed up super-resolution processing in a case where the super-resolution processing is performed on the rendering result of a novel view image.

Although the embodiment of the present disclosure has been described above, the technical scope of the present disclosure is not limited to the above-described embodiment as it is, and various modifications can be made without departing from the gist of the present disclosure. In addition, components of different embodiments and modifications may be combined as appropriate.

In addition, the effects of the embodiment described in the present description are merely examples and are not limited, and other effects may be provided.

The present technique may also have the following configurations.

(1) An information processing apparatus comprising:

an estimation unit that estimates, using a first model learned to estimate a novel view image corresponding to an arbitrary line-of-sight direction based on multi-view images including a plurality of two-dimensional images, the novel view image; and
a super-resolution processing unit that performs super-resolution processing on the estimated novel view image, wherein
the estimation unit estimates a region subject to processing in which the super-resolution processing is to be performed and a region not subject to processing in which the super-resolution processing is not to be performed, using a second model learned to estimate the region subject to processing and the region not subject to processing according to the line-of-sight direction for each of the novel view images, and
the super-resolution processing unit performs the super-resolution processing on the estimated region subject to processing and does not perform the super-resolution processing on the estimated region not subject to processing.

(2) The information processing apparatus according to (1), further comprising
a learning unit that learns the first model based on the multi-view images and learns the second model based on a difference image between the novel view image and an image after the super-resolution processing for each viewpoint of the plurality of two-dimensional images.

(3) The information processing apparatus according to (2), wherein

the estimation unit estimates the difference image corresponding to the line-of-sight direction using the second model, and generates map information indicating at least one of the region subject to processing and the region not subject to processing based on the estimated difference image, and
the super-resolution processing unit performs the super-resolution processing on the region subject to processing indicated by the map information.

(4) The information processing apparatus according to (3), wherein
the estimation unit generates the map information that sets a region having a relatively large difference amount in the difference image estimated using the second model as the region subject to processing, and sets a region having a relatively small difference amount as the region not subject to processing.

(5) The information processing apparatus according to (4), wherein
the estimation unit sets the region subject to processing and the region not subject to processing for each predetermined pixel unit.

(6) The information processing apparatus according to any one of (2) to (5), wherein
the estimation unit sets the region subject to processing based on a threshold indicating a ratio of the region subject to processing in the difference image estimated using the second model.

(7) The information processing apparatus according to any one of (2) to (6), wherein
the learning unit learns the second model using transfer learning based on the first model.

(8) The information processing apparatus according to (7), wherein
the first model and the second model cache intermediate data in a form of multiplane images in which a plurality of images are arranged in a depth direction from a viewpoint position of the two-dimensional image, and share an existence probability of an object at an intersection point between a ray tracked from the line-of-sight direction and the multiplane image.

(9) The information processing apparatus according to any one of (1) to (8), wherein
the first model and the second model are models for synthesizing a radiance field using a neural network.

(10) The information processing apparatus according to any one of (1) to (9), wherein
the super-resolution processing unit synthesizes the image after the super-resolution processing and the novel view image, and outputs the synthesized image.

(11) An information processing method including the steps of:

estimating, using a first model learned to estimate the novel view image corresponding to an arbitrary line-of-sight direction based on multi-view images including a plurality of two-dimensional images, the novel view image; performing super-resolution processing on the estimated novel view image; estimating a region subject to processing in which the super-resolution processing is to be performed and a region not subject to processing in which the super-resolution processing is not to be performed, using a second model learned to estimate the region subject to processing and the region not subject to processing according to the line-of-sight direction for each of the novel view images; and performing the super-resolution processing on the estimated region subject to processing and not performing the super-resolution processing on the estimated region not subject to processing.

(12) A computer-readable non-transitory storage medium storing a program for causing a computer to implement the steps of:

estimating, using a first model learned to estimate the novel view image corresponding to an arbitrary line-of-sight direction based on multi-view images including a plurality of two-dimensional images, the novel view image; performing super-resolution processing on the estimated novel view image; estimating a region subject to processing in which the super-resolution processing is to be performed and a region not subject to processing in which the super-resolution processing is not to be performed, using a second model learned to estimate the region subject to processing and the region not subject to processing according to the line-of-sight direction for each of the novel view images; and performing the super-resolution processing on the estimated region subject to processing and not performing the super-resolution processing on the estimated region not subject to processing.

Reference Signs List

50      CAMERA

100     INFORMATION PROCESSING APPARATUS

101     CAMERA POSITION AND POSTURE INPUT UNIT

102     MULTI-VIEW IMAGE INPUT UNIT

103     NeRF LEARNING UNIT

104     NeRF MODEL STORAGE UNIT

104a    NeRF MODEL

105     NeRF ESTIMATION UNIT

106     NeRF OUTPUT IMAGE STORAGE UNIT

107     SUPER-RESOLUTION PROCESSING UNIT

108     SUPER-RESOLUTION PROCESSED IMAGE STORAGE UNIT

109     DIFFERENCE IMAGE CALCULATION UNIT

110     DIFFERENCE MAP MODEL STORAGE UNIT

110a    DIFFERENCE MAP MODEL

111     DIFFERENCE MAP STORAGE UNIT

112     SWITCHING MAP GENERATION UNIT

113    LINE-OF-SIGHT DIRECTION INPUT UNIT

114    SWITCHING THRESHOLD SETTING UNIT

α    EXISTENCE PROBABILITY

**Claims**

1.  An information processing apparatus comprising:

    an estimation unit that estimates, using a first model learned to estimate a novel view image corresponding to an arbitrary line-of-sight direction based on multi-view images including a plurality of two-dimensional images, the novel view image; and
    a super-resolution processing unit that performs super-resolution processing on the estimated novel view image, wherein
    the estimation unit estimates a region subject to processing in which the super-resolution processing is to be performed and a region not subject to processing in which the super-resolution processing is not to be performed, using a second model learned to estimate the region subject to processing and the region not subject to processing according to the line-of-sight direction for each of the novel view images, and
    the super-resolution processing unit performs the super-resolution processing on the estimated region subject to processing and does not perform the super-resolution processing on the estimated region not subject to processing.

2.  The information processing apparatus according to claim 1, further comprising
    a learning unit that learns the first model based on the multi-view images and learns the second model based on a difference image between the novel view image and an image after the super-resolution processing for each viewpoint of the plurality of two-dimensional images.

3.  The information processing apparatus according to claim 2, wherein

    the estimation unit estimates the difference image corresponding to the line-of-sight direction using the second model, and generates map information indicating at least one of the region subject to processing and the region not subject to processing based on the estimated difference image, and
    the super-resolution processing unit performs the super-resolution processing on the region subject to processing indicated by the map information.

4.  The information processing apparatus according to claim 3, wherein
    the estimation unit generates the map information that sets a region having a relatively large difference amount in the difference image estimated using the second model as the region subject to processing, and sets a region having a relatively small difference amount as the region not subject to processing.

5.  The information processing apparatus according to claim 4, wherein
    the estimation unit sets the region subject to processing and the region not subject to processing for each predetermined pixel unit.

6.  The information processing apparatus according to claim 2, wherein
    the estimation unit sets the region subject to processing based on a threshold indicating a ratio of the region subject to processing in the difference image estimated using the second model.

7.  The information processing apparatus according to claim 2, wherein
    the learning unit learns the second model using transfer learning based on the first model.

8.  The information processing apparatus according to claim 7, wherein
    the first model and the second model cache intermediate data in a form of multiplane images in which a plurality of images are arranged in a depth direction from a viewpoint position of the two-dimensional image, and share an existence probability of an object at an intersection point between a ray tracked from the line-of-sight direction and the multiplane image.

9. The information processing apparatus according to claim 1, wherein
the first model and the second model are models for synthesizing a radiance field using a neural network.

10. The information processing apparatus according to claim 1, wherein
the super-resolution processing unit synthesizes the image after the super-resolution processing and the novel view image, and outputs the synthesized image.

11. An information processing method including the steps of:

estimating, using a first model learned to estimate the novel view image corresponding to an arbitrary line-of-sight direction based on multi-view images including a plurality of two-dimensional images, the novel view image;
performing super-resolution processing on the estimated novel view image;
estimating a region subject to processing in which the super-resolution processing is to be performed and a region not subject to processing in which the super-resolution processing is not to be performed, using a second model learned to estimate the region subject to processing and the region not subject to processing according to the line-of-sight direction for each of the novel view images; and
performing the super-resolution processing on the estimated region subject to processing and not performing the super-resolution processing on the estimated region not subject to processing.

12. A computer-readable non-transitory storage medium storing a program for causing a computer to implement the steps of:

estimating, using a first model learned to estimate the novel view image corresponding to an arbitrary line-of-sight direction based on multi-view images including a plurality of two-dimensional images, the novel view image;
performing super-resolution processing on the estimated novel view image;
estimating a region subject to processing in which the super-resolution processing is to be performed and a region not subject to processing in which the super-resolution processing is not to be performed, using a second model learned to estimate the region subject to processing and the region not subject to processing according to the line-of-sight direction for each of the novel view images; and
performing the super-resolution processing on the estimated region subject to processing and not performing the super-resolution processing on the estimated region not subject to processing.

# FIG.1

MULTI-VIEW IMAGE

NeRF LEARNING

LINE-OF-SIGHT
DIRECTION

NeRF
MODEL

104a

NeRF ESTIMATION

NeRF OUTPUT IMAGE

TO SUPER-RESOLUTION PROCESSING

# FIG.2

RGBA LAYER GROUP

FIRST VIEWPOINT

SECOND VIEWPOINT

# FIG.3

CERTAIN LAYER

REFLECTION COEFFICIENT

R G B R G B ... R G B

$\alpha$ $k_0$ $k_1$ $k_N$

RGB Pixel=$k_0$+$k_1 \cdot H_1$+$\cdots$+$k_N \cdot H_N$

BASIS FUNCTION

# FIG.4

EXISTENCE PROBABILITY IN THREE-DIMENSIONAL COORDINATES (GEOMETRY COMPONENT)

ANGLE-INDEPENDENT COLOR INFORMATION (TEXTURE COMPONENT)

ANGLE-DEPENDENT COLOR INFORMATION (VD COMPONENT)

1)Alpha    2)Color    3)Color_VD

| $\alpha$ | $k_0$ | $k_1$ | $k_2$ | $k_3$ | $k_4$ | $\cdots$ |

FINAL COLOR INFORMATION OF CERTAIN LAYER

$H_1$    $H_2$    $H_3$    $H_4$

4)Basis

ANGLE-DEPENDENT COLOR INFORMATION (BASIS FUNCTION)

# FIG.5

NeRF OUTPUT IMAGE

SWITCHING MAP (50%ON)

OFF

ON

OFF

ON

OFF

ON

OFF

ON

OFF

IMAGE AFTER
SUPER-RESOLUTION
PROCESSING (100%)

IMAGE AFTER
SUPER-RESOLUTION
PROCESSING (50%)

OFF

ON

OFF

ON

OFF

ON

OFF

EP 4 773 084 A1

FIG.6

# FIG.7

MULTI-VIEW DIFFERENCE IMAGE

NeRF LEARNING

NeRF MODEL 104a

LINE-OF-SIGHT DIRECTION → DIFFER-ENCE MAP MODEL 110a

NeRF ESTIMATION

DIFFERENCE MAP

SWITCHING MAP GENERATION

SWITCHING MAP

# FIG.8

INFORMATION PROCESSING APPARATUS — 100

- 101 CAMERA POSITION AND POSTURE INPUT UNIT
- 102 MULTI-VIEW IMAGE INPUT UNIT
- 103 NeRF LEARNING UNIT
- 104 NeRF MODEL STORAGE UNIT
- 105 NeRF ESTIMATION UNIT
- 106 NeRF OUTPUT IMAGE STORAGE UNIT
- 107 SUPER-RESOLUTION PROCESSING UNIT
- 108 SUPER-RESOLUTION PROCESSED IMAGE STORAGE UNIT
- 109 DIFFERENCE IMAGE CALCULATION UNIT
- 110 DIFFERENCE MAP MODEL STORAGE UNIT
- 111 DIFFERENCE MAP STORAGE UNIT
- 112 SWITCHING MAP GENERATION UNIT
- 113 LINE-OF-SIGHT DIRECTION INPUT UNIT
- 114 SWITCHING THRESHOLD SETTING UNIT

# FIG.9

```
                    ┌─────────────┐
                    │    START    │
                    └──────┬──────┘
                           │            ⟋S101
        ┌──────────────────▼──────────────────┐
        │  CALCULATE DIFFERENCE IMAGE BETWEEN  │
        │   NeRF OUTPUT IMAGE AND IMAGE AFTER  │
        │      SUPER-RESOLUTION PROCESSING     │
        └──────────────────┬──────────────────┘
                           │            ⟋S102
        ┌──────────────────▼──────────────────┐
        │   NeRF LEARNING OF DIFFERENCE IMAGE  │
        └──────────────────┬──────────────────┘
                           │            ⟋S103
        ┌──────────────────▼──────────────────┐
        │   STORE DIFFERENCE MAP MODEL THAT IS │
        │    NeRF MODEL OF DIFFERENCE IMAGE    │
        └──────────────────┬──────────────────┘
                           │
                    ┌──────▼──────┐
                    │     END     │
                    └─────────────┘
```

# FIG.10

ANGLE-DEPENDENT
MAP BASIS
INFORMATION
(VD COMPONENT)

MAP BASIS
INFORMATION

1)Alpha      5)Map_Color      6)Map_VD

| $\alpha$ | $k_0$ | $k_1$ |
|---|---|---|

FINAL MAP INFORMATION OF ← ⊕ ⊗
CERTAIN LAYER

$H_1$

7)Map_Basis

ANGLE-DEPENDENT
COLOR INFORMATION
(BASIS FUNCTION)

# FIG.11

START

S201

ESTIMATE NeRF OUTPUT IMAGE AND
DIFFERENCE MAP

S202

GENERATE SUPER-RESOLUTION PROCESSING
SWITCHING MAP FROM DIFFERENCE MAP

S203

SUPER-RESOLUTION PROCESSING ONLY
ON EFFECTIVE REGION IN SWITCHING MAP

S204

SYNTHESIZE NeRF OUTPUT IMAGE AND
IMAGE AFTER SUPER-RESOLUTION PROCESSING

END

# FIG.12

DIFFERENCE MAP

# FIG.13

SUPER-RESOLUTION
PROCESSING SWITCHING MAP

# FIG.14

COMPUTER 1000

CPU 1100

RAM 1200

ROM 1300

1050

SECONDARY STORAGE DEVICE 1400

PROGRAM DATA 1450

COMMUNICATION INTERFACE 1500

INPUT/OUTPUT INTERFACE 1600

1550

INPUT/OUTPUT DEVICE 1650

## INTERNATIONAL SEARCH REPORT

| International application No. |
| --- |
| **PCT/JP2024/028374** |

### A. CLASSIFICATION OF SUBJECT MATTER

*G06T 15/20*(2011.01)i; *G06T 3/4053*(2024.01)i; *G06T 7/00*(2017.01)i; *G06T 19/00*(2011.01)i
FI: G06T15/20 500; G06T19/00 A; G06T7/00 350C; G06T3/4053

According to International Patent Classification (IPC) or to both national classification and IPC

### B. FIELDS SEARCHED

Minimum documentation searched (classification system followed by classification symbols)

G06T15/20; G06T3/4053; G06T7/00; G06T19/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

IEEE Xplore

### C. DOCUMENTS CONSIDERED TO BE RELEVANT

| Category* | Citation of document, with indication, where appropriate, of the relevant passages | Relevant to claim No. |
| --- | --- | --- |
| X | WO 2020/004013 A1 (SONY CORPORATION) 02 January 2020 (2020-01-02) paragraphs [0019]-[0115] | 1, 10-12 |
| Y | | 9 |
| A | | 2-8 |
| Y | US 2023/0177968 A1 (NETDRONES, INC.) 08 June 2023 (2023-06-08) paragraph [0161] | 9 |
| A | WO 2022/070532 A1 (FUJIFILM CORPORATION) 07 April 2022 (2022-04-07) entire text, all drawings | 1-12 |
| A | Xudong Huang et al., RefSR-NeRF: Towards High Fidelity and Super Resolution View Synthesis, IEEE, 22 August 2023 entire text, all drawings | 1-12 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 October 2024** | **29 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
**Information on patent family members**

International application No.

**PCT/JP2024/028374**

| Patent document cited in search report | | | Publication date (day/month/year) | Patent family member(s) | | | Publication date (day/month/year) |
|---|---|---|---|---|---|---|---|
| WO | 2020/004013 | A1 | 02 January 2020 | US 2021/0233303 A1 paragraphs [0040]-[0138] CN 112352264 A paragraphs [0036]-[0146] | | | |
| US | 2023/0177968 | A1 | 08 June 2023 | CN 117769639 A paragraph [0160] | | | |
| WO | 2022/070532 | A1 | 07 April 2022 | US 2023/0206397 A1 entire text, all drawings | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018023034 A

**Non-patent literature cited in the description**

- **MILDENHALL, BEN** ; **PRATUL P. SRINIVASAN** ; **MATTHEW TANCIK** ; **JONATHAN T. BARRON** ; **RAVI RAMAMOORTHI** ; **REN NG.** NeRF: Representing Scenes as Neural Radiance Fields for View Synthesis.. *arXiv [cs.CV]. arXiv*, 2020, http://arxiv.org/abs/2003.08934
- **WIZADWONGSA, SUTTISAK** ; **PAKKAPON PHONGTHAWEE** ; **JIRAPHON YENPHRAPHAI** ; **SUPASORN SUWAJANAKORN**. NeX: Real-Time View Synthesis with Neural Basis Expansion. *arXiv [cs.CV].arXiv.*, 2021, http://arxiv.org/abs/2103.05606
- **WANG, ZHONGSHU** ; **LINGZHI LI** ; **ZHEN SHEN** ; **LI SHEN** ; **LIEFENG BO.** 4K-NeRF: High Fidelity Neural Radiance Fields at Ultra High Resolutions. *arXiv [cs.CV]. arXiv.*, 2022, http://arxiv.org/abs/2212.04701
- **KONG, XIANGTAO** ; **HENGYUAN ZHAO** ; **YU QIAO** ; **CHAO DONG.** *ClassSR: A General Framework to Accelerate Super-Resolution Networks by Data Characteristic.*, 2021, https://openaccess.thecvf.com/content/CVPR2021/papers/Kong_ClassSR_A_G eneral_Framework_to_Accelerate_Super-Resolution_Networks_by_Data_CVPR_2021_paper.pdf